# EUROPÄISCHE PATENTSCHRIFT

(11) **EP 1 339 247 B1**
(45) Veröffentlichungstag und Bekanntmachung des Hinweises auf die Patenterteilung: **23.04.2008**
(21) Anmeldenummer: 03002700.7
(22) Anmeldetag: 12.02.2003
(51) Int. Cl.: H04Q 7/22

(54) **Verfahren zum Erzeugen von Informationsdaten für mobile Nutzer eines Informations-Übertragungssystems**
Method for drawing up data for mobile users of an information transmission system
Procédé pour rédiger des données pour utilisateurs mobiles d'un systéme de transmission d'information

(30) Priorität: 26.02.2002 DE 10208093
(43) Veröffentlichungstag der Anmeldung: 27.08.2003
(73) Patentinhaber: Vodafone Holding GmbH, 40213 Düsseldorf (DE)
(72) Erfinder: Bierle, Christian, 80799 München (DE); Weber, Elmar, 81543 München (DE); Düsener, Mark, 80337 München (DE); Steiner, Florian, 81541 München (DE); Maretzke, Michael, 82266 Inning (DE)
(74) Vertreter: Müller, Thomas

(56) Entgegenhaltungen:
- WO-A-01/15480
- WO-A-01/33868
- WO-A-01/80499
- US-B1- 6 169 902
- MARTIN KROPAT ET AL: "Mobile Dating" SIEMENS TECHNIK REPORT, Bd. 2, Nr. 3, April 1999 (1999-04), Seiten 122-124, XP007001828

## Beschreibung

Die vorliegende Erfindung betrifft ein Verfahren zum Erzeugen von Informationsdaten für mobile Nutzer eines Informations-Übertragungssystems gemäß dem Oberbegriff von Patentanspruch 1.

Mit dem Aufkommen und der raschen Verbreitung des Internets, aber auch der Mobilfunknetze und -systeme, haben sich in letzter Zeit eine Reihe neuartiger Kommunikationsformen und -dienste entwickelt. Bei einem dieser neuartigen Kommunikationsdienste handelt es sich um die sogenannten Messenger-Systeme, die insbesondere in Verbindung mit dem Internet bekannt sind.

Ein Messenger-System ist ein spezielles Kommunikationssystem, bei dem Nutzer direkt miteinander kommunizieren können, wenn sie sich beispielsweise online im Internet befinden.

Um sich einem derartigen Messenger-System anschließen zu können, muß man sich zunächst beim Betreiber des Messenger-Systems anmelden und registrieren lassen. Dabei wird dem Nutzer unter anderem auch ein Benutzername zugeordnet, den sich der Nutzer in der Regel selbst auswählen kann. Nach der erfolgreichen Anmeldung wird der Nutzer Mitglied des Messenger-Systems.

Um mit anderen Mitgliedern des Messenger-Systems kommunizieren zu können, muß sich der Nutzer weiterhin eine Adreßliste zusammenstellen, in der er solche Nutzer zusammenfaßt, mit denen er gerne kommunizieren möchte. Derartige Adreßlisten werden beispielsweise als "Buddy-Liste" bezeichnet. Bei den aus der Nutzergesamtheit des Messenger-Systems vom Nutzer ausgewählten und in der Adreßliste abgelegten Nutzern handelt es sich also um auf den jeweiligen Nutzer bezogene Adressat-Nutzer. Jeder Nutzer kann seine Adreßliste jederzeit verändern, beispielsweise indem er weitere Adressat-Nutzer aufnimmt, Adressat-Nutzer aus der Adreßliste löscht oder dergleichen.

Die Kommunikation in einem Messenger-System funktioniert in der Regel wie folgt. Zunächst muß sich das Mitglied des Messenger-Systems online in einem Kommunikationsnetz befinden. Beispielsweise kann ein solches Kommunikationsnetz ein Datennetz wie das Internet, ein Mobilfunknetz oder dergleichen sein. Während sich also das Mitglied des Messenger-Systems online im Kommunikationsnetz bewegt, kann es zusätzlich das Messenger-System aktivieren. Danach wird dem nunmehr aktiven Nutzer angezeigt, wer von seinen zusammengestellten Adressat-Nutzern sich ebenfalls gerade online im Kommunikationsnetz befindet. Umgekehrt wird allen vom Nutzer benannten und sich online befindenden Adressat-Nutzern angezeigt, daß sich nunmehr auch der Nutzer online im Kommunikationsnetz befindet.

Der Nutzer kann nun eine Nachricht verfassen und diese an einen oder mehrere der Adressat-Nutzer versenden. Diese können auf die vom Nutzer abgeschickte Nachricht gleich antworten, so daß neben der eigentlichen Online-Tätigkeit eines jeden Nutzers ein Kommunikationsaustausch stattfinden kann. Dieser Kommunikationsaustausch funktioniert in etwa wie bei den bekannten "Chat-Systemen".

Nachteilig bei den bekannten Messenger-Systemen ist jedoch, daß diese keine Informationen über den eigenen Standort des Nutzers sowie über den Standort Dritter erzeugen und liefern können.

Im Zusammenhang mit Mobilfunksystemen haben sich in jüngster Zeit verschiedene standortbezogene Dienste etabliert, die auch als Location-Based-Services bezeichnet werden. Ein Beispiel für einen derartigen Location-Based-Service ist in der WO 01/80499 beschrieben.

Darin wird ein Verfahren zum Erzeugen von Informationsdaten für mobile Nutzer eines Informations-Übertragungssystems beschrieben, das einen Dienst für Gemeinschaften (Communities) darstellt. Der Dienst basiert auf Mobiltelefonen und mobilen Terminals. Dabei werden von den Nutzern zunächst elektronisch nutzerspezifische Daten erzeugt. Die nutzerspezifischen Daten werden an eine Zentraleinheit übertragen und in einer Speichereinrichtung zumindest zeitweilig abgespeichert. Weiterhin verfügt jeder Nutzer über eine ihm zugeordnete mobile Endeinrichtung in Form eines Mobiltelefons, deren Standort über ein Standort-Ermittlungsverfahren automatisch ermittelt wird, wobei die ermittelten Standortdaten der Endeinrichtung an die Zentraleinheit übertragen und zumindest zeitweilig in einer Speichereinrichtung abgespeichert werden.

Beispielsweise läßt sich damit der Standort von Personen ermitteln. Dazu aktiviert der Nutzer seine Endeinrichtung und schickt eine Anfrage an die Zentraleinheit. In der Zentraleinheit werden die nutzerspezifischen Daten des Nutzers elektronisch mit den Standortdaten seiner Endeinrichtung verknüpft. Weiterhin werden die nutzerspezifischen Daten in der Zentraleinheit automatisch mit möglichen nutzerspezifischen Daten anderer Nutzer des Informations-Übertragungssystems verglichen. Sobald in der Zentraleinheit eine Überschneidung von wenigstens Bestandteilen von nutzerspezifischen Daten einzelner Nutzer erkannt wird, werden die entsprechenden Nutzer automatisch über die Existenz der anderen Nutzer mit Überschneidungen bei den nutzerspezifischen Daten informiert. Gleichzeitig wird eine relative Entfernung zwischen den Nutzern angegeben.

Mit dem bekannten System ist es jedoch nicht möglich, einem Nutzer den genauen Standort anderer ermittelter Nutzer anzuzeigen.

Ausgehend vom genannten Stand der Technik liegt der vorliegenden Erfindung die Aufgabe zugrunde, ein verbessertes Verfahren zum Erzeugen von Informationen für Nutzer eines Informations-Übertragungssystems anzugeben, mit dem dynamische Informationen zumindest über den Standort einzelner Nutzer erzeugt und anderen Nutzern zur Verfügung gestellt werden können. Insbesondere soll ein derartiges Verfahren geschaffen werden, welches einem Nutzer ermöglicht Informationen über einen ihm unbekannten anderen Teilnehmer des Informations-Übertragungssystems zu erhalten, die speziell zu seinen nutzerspezifischen Daten passen. Ferner soll durch ein derartiges Verfahren ein Vergleich nutzerspezifischer Daten verschiedener Teilnehmer stattfinden.

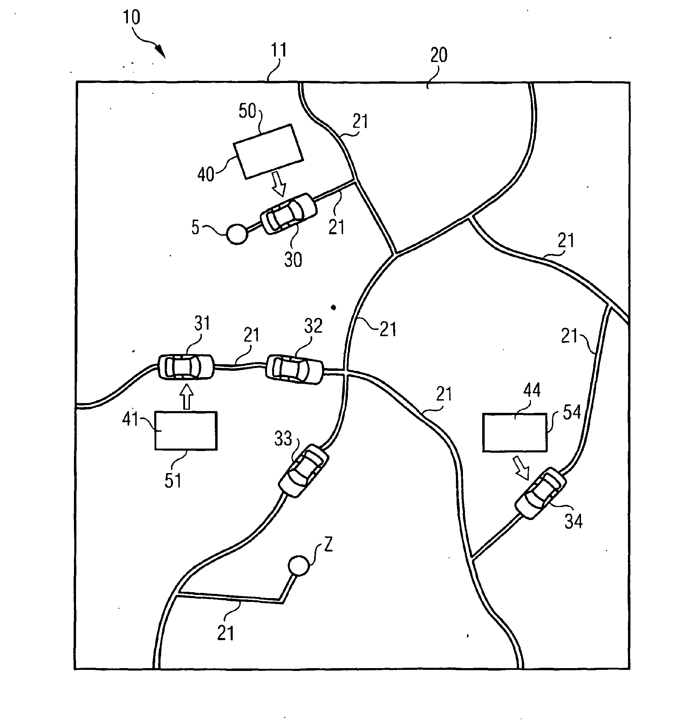

Diese Aufgabe wird erfindungsgemäß gelöst durch das Verfahren mit den Merkmalen gemäß dem unabhängigen Patentanspruch 1. Weitere Vorteile, Merkmale, Details, Aspekte und Effekte der Erfindung ergeben sich aus den Unteransprüchen, der Beschreibung sowie der Zeichnung.

Gemäß der Erfindung wird ein Verfahren zum Erzeugen von Informationsdaten für mobile Nutzer eines Informations-Übertragungssystems bereitgestellt, wobei wenigstens ein mobiler Nutzer über wenigstens eine ihm zugeordnete Eingabevorrichtung elektronisch nutzerspezifische Daten erzeugt und die nutzerspezifischen Daten an eine Zentraleinheit übertragen und zumindest zeitweilig abgespeichert werden; wobei die nutzerspezifische Daten geographische Daten und/oder verkehrsbezogene Daten und/oder Daten bezüglich eines geographischen Ziels und/oder routengebundene Daten und/oder Daten zur Kommunikation zwischen Nutzern und/oder eigenschaftsbezogene Daten enthalten; wenigstens eine dem mobilen Nutzer zugeordnete mobile Endeinrichtung vorgesehen ist, deren Standort über ein Standort-Ermittlungsverfahren automatisch ermittelt wird, wobei die ermittelten Standortdaten der Endeinrichtung an die Zentraleinheit übertragen und zumindest zeitweilig in einer Speichereinrichtung abgespeichert werden; in der Zentraleinheit die nutzerspezifischen Daten des Nutzers elektronisch mit den Standortdaten seiner Endeinrichtung verknüpft werden; die nutzerspezifischen Daten in der Zentraleinheit automatisch mit möglichen nutzerspezifischen Daten anderer Nutzer des Informations-Übertragungssystems verglichen werden; und dann, wenn in der Zentraleinheit eine Überschneidung von wenigstens Bestandteilen von nutzerspezifischen Daten einzelner Nutzer erkannt wird, die entsprechenden Nutzer automatisch über die Existenz und/oder die nutzerspezifischen Daten der anderen Nutzer mit Überschneidungen bei den nutzerspezifischen Daten informiert werden. Das Verfahren ist erfindungsgemäß dadurch gekennzeichnet, daß die Ermittlung der Standortdaten für die Endeinrichtung eines Nutzers in regelmäßigen Abständen wiederholt wird; daß die ermittelten Standortdaten in der Endeinrichtung des Nutzers und/oder in der Zentraleinheit elektronisch zu Routendaten zusammengefaßt werden; daß die Routendaten zumindest zeitweilig in einer Speichereinrichtung abgespeichert werden; daß einem Nutzer mit Überschneidung bei den nutzerspezifischen Daten zumindest die Routendaten derjenigen Nutzer mit Überschneidungen bei den nutzerspezifischen Daten auf einer digitalen Karte angezeigt werden; und daß die digitale Karte auf einer dem Nutzer zugeordneten Anzeigeeinrichtung dargestellt wird.

Beispielsweise können die nutzerspezifischen Daten geographische Daten und/oder verkehrsbezogene Daten und/oder Daten bezüglich eines geographischen Ziels und/oder routengebundene Daten enthalten. Bei den geographischen Daten kann es sich beispielsweise um einen Startpunkt des Nutzers, seinen aktuellen Aufenthaltsort oder dergleichen handeln. Bei Daten bezüglich des geographischen Ziels kann es sich beispielsweise um einen Zielpunkt des Nutzers, einen ausgemachten Treffpunkt oder dergleichen handeln. Auf diese Weise wird es möglich, gemeinsame Standortinformationen mehrerer Nutzer auf einer digitalen Karte einschließlich deren Reiseziele darzustellen. Das ist beispielsweise dann von Interesse, wenn sich mehrere Nutzer zu einer Ausflugsgemeinschaft zusammenschließen wollen.

Bei verkehrsbezogenen Daten kann es sich beispielsweise um Daten bezüglich der geplanten Reisegeschwindigkeit beziehungsweise Fortbewegungsgeschwindigkeit, um die Wahl eines bestimmten Fortbewegungsmittels und dergleichen handeln. Routenbezogene Daten geben Auskunft über die von einem Nutzer ausgewählte Route, beispielsweise über einen bestimmten Streckenverlauf, die Auswahl von Haupt- oder Nebenstraßen und dergleichen. Auch ist es auf diese Weise möglich, anderen Nutzern auf der jeweiligen digitalen Karte anzuzeigen, welchen Teil der Route ein bestimmter Nutzer mit Überschneidung bei den nutzerspezifischen Daten bereits zurückgelegt hat und welchen Teil er noch vor sich hat.

In weiterer Ausgestaltung können die nutzerspezifischen Daten Daten zur Kommunikation zwischen Nutzern und/oder eigenschaftsbezogene Daten enthalten. Bei Kommunikationsdaten kann es sich grundsätzlich um jede Form von Daten handelt, mittels derer eine Kommunikation zwischen einzelnen Nutzern ermöglicht wird. Zu nennen sind hier beispielsweise Telefonnummern, eMail-Adressen und dergleichen. Bei eigenschaftsbezogenen Daten handelt es sich beispielsweise um Datenformen, die etwas über die Eigenschaften des Nutzers aussagen, etwa über dessen Vorlieben, seine Fahrgewohnheiten, seine Hobbys, seine persönlichen Daten und dergleichen.

Gemäß dem erfindungsgemäßen Verfahren werden unterschiedliche Daten jeweils zumindest zeitweilig in einer Speichereinrichtung abgespeichert. Dabei kann vorgesehen sein, daß jeweils separate Speichereinrichtungen verwendet werden. Natürlich ist auch denkbar, daß nur eine einzige Speichereinrichtung eingesetzt wird. Die Speichereinrichtung(en) kann/können je nach Ausgestaltung des Systems der Endeinrichtung und/oder der Zentraleinrichtung zugeordnet sein. Natürlich kann/können die Speichereinrichtung(en) auch als gänzlich separates Bauelement ausgebildet sein. In diesem Fall können die Zentraleinheit und die Endeinrichtungen je nach Bedarf darauf zugreifen.

Die Ermittlung der Standortdaten wird für die Endeinrichtung eines Nutzers in regelmäßigen Abständen wiederholt. Damit ist ein Fortbewegungsablauf des Nutzers beziehungsweise der diesem zugeordneten Endeinrichtung darstellbar. Die einzelnen Standortdaten können in einer Speichereinrichtung abgespeichert werden und stehen dann auch später als Fortbewegungsprofil des entsprechenden Nutzers zur Verfügung. Dies kann in verschiedenen Fällen von besonderem Interesse sein.

Die ermittelten Standortdaten werden in der Endeinrichtung des Nutzers und/oder in der Zentraleinheit elektronisch zu Routendaten zusammengefasst. Die Routendaten können zumindest zeitweilig in einer Speichereinrichtung abgespeichert werden. Weiterhin können einem Nutzer mit Überschneidung bei den nutzerspezifischen Daten zumindest die Routendaten derjenigen Nutzer mit Überschneidungen bei den nutzerspezifischen Daten auf der digitalen Karte angezeigt werden, wobei die digitale Karte vorteilhaft auf der dem Nutzer zugeordneten Anzeigeeinrichtung dargestellt wird.

Auf diese Weise lassen sich ganz neue Dienste realisieren. Dies soll anhand eines nicht ausschließlichen Beispiels verdeutlicht werden, ohne daß die Erfindung auf diese konkrete Ausführungsform beschränkt wäre. Angenommen, der Nutzer des Systems fährt einen Geländewagen und möchte eine neue OFF-Road-Strecke ausprobieren. Dann gibt er als nutzerspezifische Daten beispielsweise seinen Startpunkt und seinen Zielpunkt ein. Nun fährt er los, wobei in regelmäßigen Abständen die Standortdaten seiner Endeinrichtung ermittelt werden. Die Standortdaten werden gespeichert, wodurch nach und nach ein Fortbewegungsprofil des Nutzers entsteht, das der gefahrenen Strecke entspricht. Wenn nun ein anderer Nutzer des Systems ebenfalls eine Geländefahrt machen möchte, erzeugt er als nutzerspezifische Daten ebenfalls seinen Startpunkt und seinen Zielpunkt. Wenn diese identisch zu den Punkten des ersten Nutzers sind, stellt die Zentraleinheit eine Übereinstimmung fest und zeigt dem zweiten Nutzer auf der digitalen Karte die aus den Standortdaten des ersten Nutzers erzeugten Routendaten an. Der zweite Nutzer kann nun dieser Route folgen.

Das ermöglicht eine ganze Palette neuartiger Möglichkeiten und Dienste, wie im weiteren Verlauf der Beschreibung näher erläutert wird.

Dabei ist insbesondere vorteilhaft vorgesehen, daß die Darstellung der Standortdaten und möglicher weiterer Informationen in Echtzeit (real-time) erfolgt.

Grundsätzlich ist die Erfindung nicht auf bestimmte Arten von Informations-Übertragungssystemen beschränkt. Denkbar ist jede Systemform, mit der mobile Nutzer Informationen übertragen können. Einige nicht ausschließliche Beispiele für geeignete Systeme werden im weiteren Verlauf der Beschreibung näher erläutert.

Gemäß dem erfindungsgemäßen Verfahren ist eine Eingabevorrichtung, eine Endeinrichtung sowie eine Anzeigeeinrichtung vorgesehen. Diese Einrichtungen und Vorrichtungen können je nach Beschaffenheit entweder als separate Geräte ausgebildet sein. Natürlich ist es auch denkbar, daß jeweils zwei oder mehr Teilgeräte zu einem Gesamtgerät zusammengefaßt sind. So ist es beispielsweise denkbar, daß die Eingabevorrichtung mit der Endeinrichtung und/oder der Anzeigeeinrichtung kombiniert ist. Natürlich sind auch Fälle denkbar, in denen alle drei Teilgeräte Bestandteile eines einzigen Geräts sind. Im letztgenannten Fall kann eine enorm hohe Mobilität für den entsprechenden Nutzer erreicht werden.

Die Erfindung ist nicht auf eine bestimmte Anzahl von Nutzern, die auf der digitalen Karte abgebildet werden beschränkt. Vielmehr ergibt sich die Anzahl der dargestellten Nutzer über die von jedem einzelnen Nutzer elektronisch erzeugten nutzerspezifischen Daten. Je detaillierter und genauer diese nutzerspezifischen Daten gestaltet sind, desto weniger Nutzer werden die Kriterien erfüllen und desto weniger Nutzer werden auf der digitalen Karte abgebildet.

Jeder Nutzer hat also die Möglichkeit, bereits bei der Erstellung seiner nutzerspezifischen Informationen darauf hin zu wirken, wie groß die Anzahl der zu erwartenden Treffer in etwa werden wird.

Mit dem erfindungsgemäßen Verfahren ist es möglich, daß der Nutzer bei jeder Beanspruchung des Dienstes seine nutzerspezifischen Daten neu erzeugt. Es ist jedoch auch denkbar, daß bestimmte nutzerspezifische Daten, bei denen es sich beispielsweise um sich nicht verändernde Basisdaten handeln kann, vom Nutzer nur einmal erzeugt und an die Zentraleinheit übertragen werden. Diese Daten werden dann in einer dem Nutzer zugeordneten Datei abgespeichert. Bei einer späteren Aktivierung des Dienstes stehen diese Daten dann bereits zur Verfügung, was dem Nutzer die Handhabung des Systems enorm erleichtert. Die bereits vorhandenen Daten können dann um für den jeweiligen Einzelfall spezifische Daten ergänzt werden.

Vorzugsweise können die Standortdaten der Endeinrichtung eines Nutzers über einen bestimmten Zeitraum hinweg ermittelt werden. Damit kann beispielsweise automatisch ermittelt werden, wie lange ein Nutzer für eine bestimmte Fortbewegungsstrecke benötigt hat und wie lange er für einen Rest einer Strecke möglicherweise noch benötigen wird. Derartige Informationen sind beispielsweise dann erforderlich, wenn sich zwei Nutzer zu einem bestimmten Zeitpunkt an einem bestimmten Ort treffen wollen. Über die Darstellung auf der digitalen Karte können die Nutzer jeweils verfolgen, wie weit sie selbst und der/die anderen Nutzer noch vom Treffpunkt entfernt sind.

Vorteilhaft können weiterhin zumindest Bestandteile von nutzerspezifischen Daten derjenigen Nutzer mit Überschneidung bei den nutzerspezifischen Daten auf der dem Nutzer zugeordneten Anzeigeeinrichtung, insbesondere in der digitalen Karte, dargestellt werden. Auf diese Weise wird es möglich, die auf der digitalen Karte dargestellten Nutzer, die bis dahin nur als Standortdaten abgebildet und visualisiert sind, zu individualisieren. So wird es jedem Nutzer möglich, mehr über die Nutzer mit Überschneidungen bei den nutzerspezifischen Daten zu erfahren.

Durch die Anzeige dynamischer Informationen über den Standort sowie weiterer nutzerspezifischer Daten auf der digitalen Karte, wie beispielsweise gemeinsamer Ziele und dergleichen ist es beispielsweise besonders einfach und auch kurzfristig möglich, Ausflugsgemeinschaften gleich Interessierter zu bilden. Die Zusammenführung und Information kann in Echtzeit während der Fahrt erfolgen.

Vorzugsweise können die Standortdaten mittels eines GSM basierten Standort-Ermittlungsverfahrens und/oder mittels eines GPS basierten Standort-Ermittlungsverfahrens ermittelt werden. Die Kommunikation zwischen den mobilen Endeinrichtungen und der Zentraleinheit kann beispielsweise via GPRS erfolgen.

Zur Ortung mobiler Endeinrichtungen über bestimmte Standort-Ermittlungsverfahren sind bereits verschiedene Lösungen bekannt geworden. So ist in der DE 198 03 960 ein Verfahren und System zur Benutzung von modernen Ortungssystemen in Mobilfunksystemen beschrieben. Die Ortung eines Mobiltelefons kann beispielsweise auch nach dem EOTD-Verfahren (Enhanced Observed Time Difference) erfolgen. Dabei werden Laufzeitunterschiede von Signalen eines Mobiltelefons zu mehreren Sendern gemessen. Aus den ermittelten Werten kann dann unter Verwendung geeigneter Algorithmen automatisch der Standort des Mobiltelefons ermittelt werden.

Vorteilhaft können die Standortdaten in parametrierbaren Abständen aktualisiert werden. Durch eine Veränderlichkeit der Zeitabstände wird es auf besonders einfache Weise möglich, das Verfahren an bestimmte Voraussetzungen und Situationen anzupassen.

Beispielsweise kann das Informations-Übertragungssystem als Kommunikationssystem und/oder als Navigationssystem ausgebildet ist. Bei dem Kommunikationssystem kann es sich beispielsweise um ein Mobilfunksystem handeln. In diesem Fall sind die Endeinrichtungen vorteilhaft als Mobiltelefone ausgebildet. Bei den Eingabevorrichtungen handelt es sich dann vorzugsweise um deren Tastaturen. Es ist jedoch auch denkbar, daß es sich bei dem Kommunikationssystem um das Internet handelt. In diesem Fall kann es sich bei der Endeinrichtung beispielsweise um einen mobilen Computer (Laptop), um einen PDA (Personal Digital Assistant) oder dergleichen handeln.

Auch ist es denkbar, daß das Informations-Übertragungssystem als Hybridsystem aus zwei Teilsystemen gebildet ist, wobei ein erstes Teilsystem als Kommunikationssystem und das zweite Teilsystem als Navigationssystem ausgebildet ist. Auf diese Weise wird es möglich, das Verfahren in bestehende Navigationsgeräte oder Routenplaner zu integrieren, um ein leichteres Erfassen der Ziele und Routen zu erleichtern und damit die Bedienerfreundlichkeit zu erhöhen.

In einem solchen Fall kann beispielsweise die Ermittlung der Standortdaten mittels des Kommunikationssystems erfolgen. Die Darstellung der Informationsdaten kann mittels des Navigationssystems erfolgt und die Erzeugung der nutzerspezifischen Daten kann mittels des Kommunikationssystems und/oder des Navigationssystems erfolgen.

Vorzugsweise können Informationsdaten für mobile Nutzer wenigstens einer Nutzergruppe des Informations-Übertragungssystems erzeugt werden, wobei dann im Informations-Übertragungssystem elektronisch zunächst eine Nutzergruppe erzeugt wird. Auf diese Weise wird es möglich, bestimmte Gruppen (Communities) innerhalb des Systems zu erzeugen. Diese Gruppen können beispielsweise bestimmte Ausrichtungen haben. So ist es beispielsweise denkbar, daß sich Halter bestimmter Fahrzeugtypen und -arten, die oftmals auch überschneidende Interessen bezüglich ihrer Freizeitgestaltung haben, zu einer solchen Nutzergruppe zusammenschließen. Dazu ist zunächst erforderlich, daß die entsprechenden Nutzer Mitglieder der Nutzergruppe werden. Dies kann wie bei den eingangs beschriebenen Messenger-Systemen erfolgen. Wenn nun die nutzerspezifischen Daten verglichen werden, werden nur solche Nutzer überprüft, die auch Mitglied der jeweiligen Nutzergruppe sind. Damit wird sichergestellt, daß auf den digitalen Karten der Nutzer immer nur solche Nutzer dargestellt werden, die Mitglied der Nutzergruppe sind und somit enge Berührungspunkte untereinander aufweisen.

Es ist bekannt, ein Verfahren zum Erzeugen von Informationsdaten für mobile Nutzer eines Informations-Übertragungssystems bereitzustellen, wobei wenigstens ein mobiler Nutzer über wenigstens eine ihm zugeordnete Eingabevorrichtung elektronisch nutzerspezifische Daten erzeugt und die nutzerspezifischen Daten an eine Zentraleinheit übertragen und in einer Speichereinrichtung zumindest zeitweilig abgespeichert werden; wenigstens eine dem mobilen Nutzer zugeordnete mobile Endeinrichtung vorgesehen ist, deren Standort über ein Standort-Ermittlungsverfahren automatisch ermittelt wird, wobei die ermittelten Standortdaten der Endeinrichtung an die Zentraleinheit übertragen und zumindest zeitweilig in einer Speichereinrichtung abgespeichert werden; in der Zentraleinheit die nutzerspezifischen Daten des Nutzers elektronisch mit den Standortdaten seiner Endeinrichtung verknüpft werden; die nutzerspezifischen Daten in der Zentraleinheit automatisch mit möglichen nutzerspezifischen Daten anderer Nutzer des Informations-Übertragungssystems verglichen werden; und dann, wenn in der Zentraleinheit eine Überschneidung von wenigstens Bestandteilen von nutzerspezifischen Daten einzelner Nutzer erkannt wird, die entsprechenden Nutzer automatisch über die Existenz der anderen Nutzer mit Überschneidungen bei den nutzerspezifischen Daten informiert werden. Ferner ist bekannt, daß ein Nutzer über die Existenz anderer Nutzer informiert wird, indem zumindest die Standortdaten derjenigen Nutzer mit Überschneidungen bei den nutzerspezifischen Daten auf einer digitalen Karte abgebildet werden; und daß die digitale Karte auf einer dem Nutzer zugeordneten Anzeigeeinrichtung dargestellt wird.

Mit diesem Verfahren wird es für einen Nutzer auf einfache Weise möglich, andere Nutzer mit Überschneidungen bei den nutzerspezifischen Daten mit gegenseitiger, im Kontext stehender Standortinformation zu lokalisieren.

Das Verfahren bedient sich dabei zweier unterschiedlicher Arten von Daten. Zum einen werden Daten bezüglich des aktuellen Standorts eines Nutzers beziehungsweise der diesem zugeordneten Endeinrichtung erzeugt. Bei dem Verfahren handelt es sich mithin um einen speziellen Location-Based-Service. Weiterhin werden nutzerspezifische Daten erzeugt und ausgewertet. Dabei ist die Erfindung nicht auf eine bestimmte Art nutzerspezifischer Daten beschränkt. Als nutzerspezifische Daten können all solche Datentypen dienen, die einem bestimmten Nutzer zugeordnet werden können. Nutzerspezifische Daten enthalten insbesondere Informationen über die Person des Nutzers und/oder seine Gewohnheiten und/oder bestimmte Aktivitäten und/oder bestimmte geographische Punkte. Die nutzerspezifischen Informationen sind vorteilhaft in der Lage, einen bestimmten Nutzer zu kennzeichnen, zu charakterisieren, zu individualisieren und dergleichen. Als nutzerspezifische Daten werden weiterhin auch solche Daten verstanden, die Informationen zu gewissen Aktivitäten des Nutzers, zu geographischen Punkte, zu Fortbewegungsszenarien und dergleichen liefern. Natürlich ist die Erfindung nicht auf die genannten Beispiele beschränkt, so daß auch andere Arten nutzerspezifischer Daten denkbar und möglich sind.

Ein Grundgedanke dieses Verfahrens besteht darin, daß die nutzerspezifischen Informationen, die jeder Nutzer des Informations-Übertragungssystems erstellt und an eine Zentraleinheit übertragen hat, in der Zentraleinheit miteinander verglichen werden, und daß all diejenigen Nutzer, bei denen zumindest teilweise eine Überschneidung bei den nutzerspezifischen Daten festgestellt wird, auf eine digitale Karte "gematcht" werden. Die digitale Karte wird auf den jeweiligen Nutzern zugeordneten Anzeigeeinrichtungen dargestellt. Jeder Nutzer kann sich somit ein genaues Bild davon machen, wo sich die Nutzer mit den Überschneidungen bei den nutzerspezifischen Daten genau befinden. Mittels des Verfahrens wird somit eine Möglichkeit geschaffen, gemeinsame Standortinformationen mehrerer Nutzer auf einer digitalen Karte darstellen zu können.

Nachfolgend wird die Erfindung anhand eines Ausführungsbeispiels unter Bezugnahme auf die beiliegende Zeichnung näher erläutert. Dabei zeigt die einzige Figur in nicht maßstabsgerechter Darstellung einen Ausschnitt aus einer digitalen Karte, in der der Ablauf eines Ausführungsbeispiels des erfindungsgemäßen Verfahrens dargestellt ist.

In der Figur ist ein Ausschnitt einer digitalen Karte 20 zu sehen, der auf der Anzeigeeinrichtung 11 eines nicht näher gezeigten Informations-Übertragungssystems 10 dargestellt ist. Die digitale Karte 20 zeigt den Verlauf einer ganzen Anzahl von Straßen 21.

Das Informations-Übertragungssystem 10 ist als Hybridsystem aufgebaut und besteht auf zwei Teilsystemen. Das erste Teilsystem umfaßt ein als Mobilfunksystem ausgebildetes Kommunikationssystem. Jeder Nutzer des Mobilfunksystems verfügt über eine als Mobiltelefon ausgestaltete Endeinrichtung (nicht dargestellt). Jede Endeinrichtung weist eine als Eingabetastatur ausgestaltete Eingabevorrichtung auf. Weiterhin verfügt das System 10 über ein zweites, als Navigationssystem ausgebildetes Teilsystem. Die Anzeigeeinrichtung 11 ist im vorliegenden Beispiel Bestandteil des Navigationssystems.

Vor diesem Hintergrund wird nachfolgend ein Ausführungsbeispiel für das erfindungsgemäße Verfahren beschrieben. Dabei wird davon ausgegangen, daß es sich bei den Nutzern des Systems 10 um Fahrer einer bestimmten Automarke mit einem bestimmten Fahrverhalten, insbesondere einem bestimmten Fahrtzweck handelt. Die Fahrer der Fahrzeuge sollen jeweils über ein Mobiltelefon verfügen, die Fahrzeuge selbst sollen mit einem Navigationssystem ausgerüstet sein.

Fahrer bestimmter Fahrzeugtypen zeichnen sich beispielsweise dadurch aus, daß sie ihr Fahrzeug im Rahmen der Freizeitgestaltung zu ähnlichen Zwecken verwenden. Insbesondere Fahrer von Sportwagen unternehmen mit ihren Fahrzeugen in der Freizeit häufig Ausflüge zu bestimmten Zielen. Dabei kommt es nicht selten vor, daß sich mehrere Fahrer zu einer Gruppe zusammenschließen und diese Fahrten gemeinsam unternehmen. Bisher war es erforderlich, daß sich die Fahrer zunächst kontaktieren mußten, um derartige Verabredungen zu treffen.

Nunmehr ist es möglich, daß sich derartige Ausflugsgemeinschaften dynamisch und ohne vorherige Absprache bilden können. Auf diese Weise können sich auch solche Fahrer treffen, die sich bis dahin persönlich nicht bekannt waren.

Dazu ist vorgesehen, daß sich ein Nutzer 30 des Systems 10 über sein Mobiltelefon zunächst für den entsprechenden Dienst einträgt. Dazu erzeugt er über sein Mobiltelefon nutzerspezifische Daten 40 und überträgt diese an eine Zentraleinheit. Hierbei kann es sich beispielsweise um seinen Startpunkt S, seinen Zielpunkt Z sowie gegebenenfalls andere nutzerspezifische Daten handeln. Der Standort des Mobiltelefons beziehungsweise damit auch des Nutzers wird über ein Standort-Ermittlungsverfahrens wie GPS, GSM oder dergleichen ermittelt und an die Zentraleinheit übertragen. Diese Standortermittlung erfolgt automatisch im Mobilfunksystem und wird in regelmäßigen Abständen wiederholt. Auf ähnliche Weise tragen sich auch andere Nutzer 31, 32, 33, 34 in das System 10 ein und erzeugen nutzerspezifische Daten 41, 44.

In der Zentraleinheit werden die nutzerspezifischen Daten aller Nutzer 31 bis 34 mit nutzerspezifischen Daten anderer Nutzer des Systems 10 verglichen. Erfolgt über die Zentraleinheit die Anmeldung anderer Nutzer mit überschneidenden Interessen, werden diese automatisch über die Existenz der anderen Nutzer informiert.

Im vorliegenden Beispiel sollen die Nutzer 31 und 34 jeweils das gleiche Ziel haben wie Nutzer 30. Die anderen Nutzer 32 und 33 sollen zwar auch über überschneidende nutzerspezifische Daten verfügen, jedoch soll deren Zielpunkt im Ausführungsbeispiel ein anderer sein.

Die Information der einzelnen Nutzer über die Existenz anderer Nutzer erfolgt derart, daß zumindest die Standortdaten derjenigen Nutzer 30 bis 34 mit Überschneidungen bei den nutzerspezifischen Daten auf der digitalen Karte 20 dargestellt werden. Der Nutzer 30 sieht auf der Anzeigeeinrichtung 11 seines Navigationssystems beispielsweise, daß sich in seinem Umfeld vier weitere Nutzer 31, 32, 33 und 34 mit überschneidenden Interessen befinden. Gleichzeitig werden ihm die genauen Standorte aller Nutzer, einschließlich des eigenen, auf der digitalen Karte 20 angezeigt.

Zusätzlich werden über die Zentraleinheit zu solchen Nutzern 31, 34, die den gleichen Zielpunkt Z wie der Nutzer 30 haben, in entsprechenden Anzeigefeldern 50, 51, 54 weitere nutzerspezifische Daten dargestellt. Hierbei kann es sich beispielsweise um Daten zum Ermöglichen einer direkten Kontaktaufnahme, wie Telefonnummer oder dergleichen handeln. Alle drei Nutzer 30, 31, 34 mit Zielpunkt Z haben auf ihrer Anzeigeeinrichtung 11 in entsprechenden Anzeigefeldern 50, 51, 54 die nutzerspezifischen Daten 40, 41, 44.

Die Standortinformationen werden in parametrierbaren Intervallen aktualisiert, so daß für die einzelnen Nutzer 30, 31, 34 auch erkennbar ist, wie schnell die anderen Nutzer jeweils vorankommen und wann und wo mit einem Zusammentreffen zu rechnen ist.

Durch das erfindungsgemäße Verfahren wird es nunmehr auf einfache Weise möglich, eine Lokalisierung von mobilen Verkehrsteilnehmern mit gegenseitiger, im Kontext stehender dynamischer Standort- und Zielinformation zu generieren. Die Zusammenführung und Information der einzelnen Nutzer kann dabei vorteilhaft in Echtzeit (real-time) während der Fahrt erfolgen.

### Bezugszeichenliste

- 10 =: Informations-Übertragungssystem
- 11 =: Anzeigeeinrichtung

- 20 =: Digitale Karte
- 21 1 =: Straße

- 30 =: Mobiler Nutzer
- 31 =: Mobiler Nutzer
- 32 =: Mobiler Nutzer
- 33 =: Mobiler Nutzer
- 34 =: Mobiler Nutzer

- 40 =: Nutzerspezifische Daten
- 41 =: Nutzerspezifische Daten
- 44 =: Nutzerspezifische Daten

- 50 =: Anzeigefeld
- 51 =: Anzeigefeld
- 54 =: Anzeigefeld

- S =: Startpunkt
- Z =: Zielpunkt

## Patentansprüche

1. Verfahren zum Erzeugen von Informationsdaten für mobile Nutzer eines Informations-Übertragungssystems (10), wobei
wenigstens ein mobiler Nutzer (30-34) über wenigstens eine ihm zugeordnete Eingabevorrichtung elektronisch nutzerspezifische Daten erzeugt und die nutzerspezifischen Daten an eine Zentraleinheit übertragen und zumindest zeitweilig abgespeichert werden, wobei die nutzerspezifische Daten geographische Daten und/oder verkehrsbezogene Daten und/oder Daten bezüglich eines geographischen Ziels und/oder routengebundene Daten und/oder Daten zur Kommunikation zwischen Nutzern und/oder eigenschaftsbezogene Daten enthalten;
wenigstens eine dem mobilen Nutzer (30-34) zugeordnete mobile Endeinrichtung vorgesehen ist, deren Standort über ein Standort-Ermittlungsverfahren automatisch ermittelt wird, wobei die ermittelten Standortdaten der Endeinrichtung an die Zentraleinheit übertragen und zumindest zeitweilig in einer Speichereinrichtung abgespeichert werden;
in der Zentraleinheit die nutzerspezifischen Daten des Nutzers (30-34) elektronisch mit den Standortdaten seiner Endeinrichtung verknüpft werden;
die nutzerspezifischen Daten in der Zentraleinheit automatisch mit möglichen nutzerspezifischen Daten anderer Nutzer (30-34) des Informations-Übertragungssystems (10) verglichen werden;
und dann, wenn in der Zentraleinheit eine Überschneidung von wenigstens Bestandteilen von nutzerspezifischen Daten einzelner Nutzer (30-34) erkannt wird, die entsprechenden Nutzer (30-34) automatisch über die Existenz und/oder die nutzerspezifischen Daten der anderen Nutzer (30-34) mit Überschneidungen bei den nutzerspezifischen Daten informiert werden,
**dadurch gekennzeichnet,**
**daß** die Ermittlung der Standortdaten für die Endeinrichtung eines Nutzers (30-34) in regelmäßigen Abständen wiederholt wird;
**daß** die ermittelten Standortdaten in der Endeinrichtung des Nutzers (30-34) und/oder in der Zentraleinheit elektronisch zu Routendaten zusammengefaßt werden;
**daß** die Routendaten zumindest zeitweilig in einer Speichereinrichtung abgespeichert werden;
**daß** einem Nutzer (30-34) mit Überschneidung bei den nutzerspezifischen Daten zumindest die Routendaten derjenigen Nutzer (30-34) mit Überschneidungen bei den nutzerspezifischen Daten auf einer digitalen Karte (20) angezeigt werden; und
**daß** die digitale Karte (20) auf einer dem Nutzer (30-34) zugeordneten Anzeigeeinrichtung (11) dargestellt wird.

2. Verfahren nach Anspruch 1, **dadurch gekennzeichnet, daß** die Standortdaten der Endeinrichtung eines Nutzers (30-34) über einen bestimmten Zeitraum ermittelt werden.

3. Verfahren nach einem der Ansprüche 1 oder 2, **dadurch gekennzeichnet, daß** weiterhin zumindest Bestandteile von nutzerspezifischen Daten (40, 41, 44) derjenigen Nutzer (30-34) mit Überschneidung bei den nutzerspezifischen Daten (40, 41, 44) auf der dem Nutzer (30-34) zugeordneten Anzeigeeinrichtung (11), insbesondere in der digitalen Karte (20), dargestellt werden.

4. Verfahren nach einem der Ansprüche 1 bis 3, **dadurch gekennzeichnet, daß** die nutzerspezifischen Daten geographische Daten und/oder verkehrsbezogene Daten und/oder Daten bezüglich eines geographischen Ziels und/oder routenbezogene Daten enthalten.

5. Verfahren nach einem der Ansprüche 1 bis 4, **dadurch gekennzeichnet, daß** die nutzerspezifischen Daten Daten zur Kommunikation zwischen Nutzern und/oder eigenschaftsbezogene Daten enthalten.

6. Verfahren nach einem der Ansprüche 1 bis 5, **dadurch gekennzeichnet, daß** die Standortdaten mittels eines GSM basierten Standort-Ermittlungsverfahrens und/oder mittels eines GPS basierten Standort-Ermittlungsverfahrens ermittelt werden.

7. Verfahren nach einem der Ansprüche 1 bis 6, **dadurch gekennzeichnet, daß** die Standortdaten in parametrierbaren Abständen aktualisiert werden.

8. Verfahren nach einem der Ansprüche 1 bis 7, **dadurch gekennzeichnet, daß** das Informations-Übertragungssystem (10) als Kommunikationssystem und/oder als Navigationssystem ausgebildet ist.

9. Verfahren nach Anspruch 8, **dadurch gekennzeichnet, daß** das Informations-Übertragungssystem (10) als Hybridsystem aus zwei Teilsystemen gebildet ist, wobei ein erstes Teilsystem als Kommunikationssystem und das zweite Teilsystem als Navigationssystem ausgebildet ist.

10. Verfahren nach Anspruch 9, **dadurch gekennzeichnet, daß** die Ermittlung der Standortdaten mittels des Kommunikationssystems erfolgt, daß die Darstellung der Informationsdaten mittels des Navigationssystems erfolgt und daß die Erzeugung der nutzerspezifischen Daten mittels des Kommunikationssystems und/oder des Navigationssystems erfolgt.

11. Verfahren nach einem der Ansprüche 1 bis 10, **dadurch gekennzeichnet, daß** Informationsdaten für mobile Nutzer wenigstens einer Nutzergruppe des Informations-Übertragungssystems (10) erzeugt werden, wobei im Informations-Übertragungssystem (10) elektronisch zunächst eine Nutzergruppe erzeugt wird.

## Claims

1. Method of generating information data for mobile users of an information transmission system (10), wherein
at least one mobile user (30-34) electronically generates user-specific data by means of an input device assigned to him and the user-specific data are transmitted to a central unit and stored at least temporarily, the user-specific data containing geographical data and/or traffic-related data and/or data relating to a geographical destination and/or route-related data and/or data for communication between users and/or property-related data;
at least one mobile terminal assigned to the mobile user (30-34) is provided, the location of which is automatically detected by a location detecting method, the location data detected for the terminal being transmitted to the central unit and stored at least temporarily in a memory;
in the central unit the user-specific data of the user (30-34) are electronically linked to the location data of his terminal;
the user-specific data in the central unit are automatically compared with possible user-specific data of other users (30-34) of the information transmission system (10);
and when an overlapping of at least elements of user-specific data of individual users (30-34) is detected in the central unit the corresponding users (30-34) are automatically informed of the existence and/or the user-specific data of the other users (30-34) with overlaps in the user-specific data,
**characterised in that**
the detection of the location data for the terminal of a user (30-34) is repeated at regular intervals;
the location data determined are collated electronically in the terminal of the user (30-34) and/or in the central unit to produce route data;
the route data are stored at least temporarily in a memory;
a user (30-34) with an overlap in the user-specific data is informed of at least the route data of those users (30-34) that overlap in the user-specific data on a digital map (20); and
the digital map (20) is displayed on a display device (11) assigned to the user (30-34).

2. Method according to claim 1, **characterised in that** the location data of the terminal of a user (30-34) are determined over a certain period of time.

3. Method according to one of claims 1 or 2, **characterised in that**, in addition, at least elements of user-specific data (40, 41, 44) of those users (30-34) with an overlap of user-specific data (40, 41, 44) are displayed on the display device (11) assigned to the user (30-34), particularly in the digital map (20).

4. Method according to one of claims 1 to 3, **characterised in that** the user-specific data contain geographical data and/or traffic-related data and/or data relating to a geographical destination and/or route-related data.

5. Method according to one of claims 1 to 4, **characterised in that** the user-specific data contain data for communication between users and/or property-related data.

6. Method according to one of claims 1 to 5, **characterised in that** the location data are determined by means of a GSM-based location detecting method and/or by means of a GPS-based location detecting method.

7. Method according to one of claims 1 to 6, **characterised in that** the location data are updated at parameter-driven intervals.

8. Method according to one of claims 1 to 7, **characterised in that** the information transmission system (10) is configured as a communications system and/or as a navigation system.

9. Method according to claim 8, **characterised in that** the information transmission system (10) is formed as a hybrid system from two partial systems, a first partial system being configured as a communications system and the second partial system being configured as a navigation system.

10. Method according to claim 9, **characterised in that** the location data are detected using the communications system, the information data are displayed by means of the navigation system and the user-specific data are generated by means of the communications system and/or the navigation system.

11. Method according to one of claims 1 to 10, **characterised in that** information data are generated for mobile users of at least one user group of the information transmission system (10), a user group initially being generated electronically in the information transmission system (10).

## Revendications

1. Procédé pour générer des données pour les utilisateurs mobiles d'un système de transmission d'informations (10),
au moins un utilisateur mobile (30-34) générant électroniquement des données propres à l'utilisateur par le biais d'au moins un dispositif de saisie qui lui est affecté et les données propres à l'utilisateur étant transmises à une unité centrale et enregistrées au moins temporairement, les données propres à l'utilisateur contenant des données géographiques et/ou des données relatives au trafic et/ou des données relatives à un lieu géographique et/ou des données relatives à un itinéraire et/ou des données de communication entre les utilisateurs et/ou des données relatives à des propriétés ;
au moins un terminal mobile affecté à l'utilisateur mobile (30-34) étant prévu, dont le lieu est déterminé automatiquement par le biais d'un procédé de détermination de lieu, les données de lieu déterminées du terminal étant transmises à l'unité centrale et enregistrées au moins temporairement dans un dispositif de stockage ;
les données de l'utilisateur (30-34) étant reliées électroniquement dans l'unité centrale avec les données de lieu du terminal ;
les données propres à l'utilisateur dans l'unité centrale étant comparées automatiquement avec les données propres à l'utilisateur éventuelles d'autres utilisateurs (30-34) du système de transmission d'informations (10) ;
puis, lorsqu'un recoupement d'éléments au moins des données d'utilisateurs individuels (30-34) est identifié dans l'unité centrale, les utilisateurs (30-34) correspondants étant automatiquement informés de l'existence et/ou des données propres à l'utilisateur des autres utilisateurs (30-34) avec des recoupements de données propres à l'utilisateur,
**caractérisé en ce que** la détermination des données de lieu est répétée pour le terminal d'un utilisateur (30-34) à intervalles réguliers ;
**en ce que** les données de lieu déterminées sont collectées électroniquement dans le terminal de l'utilisateur (30-34) et/ou dans l'unité centrale pour les données d'itinéraire ;
**en ce que** les données d'itinéraire sont enregistrées au moins temporairement dans un dispositif de stockage ;
**en ce que** les données d'itinéraire au moins de l'utilisateur (30-34) sont affichées pour cet utilisateur (30, 34) avec les recoupements pour les données propres à l'utilisateur sur une carte numérique (20) ;
et **en ce que** la carte numérique (20) est représentée sur un dispositif d'affichage (11) affecté à l'utilisateur (30-34).

2. Procédé selon la revendication 1, **caractérisé en ce que** les données de lieu du terminal d'un utilisateur (30-34) sont déterminées sur une période donnée.

3. Procédé selon l'une quelconque des revendications 1 ou 2, **caractérisé en ce que** des éléments au moins des données propres à l'utilisateur (40, 41, 44) sont représentées à l'utilisateur (30-34) avec des recoupements de données propres à l'utilisateur (40, 41, 44) sur le dispositif d'affichage (11) affecté à l'utilisateur (30, 34), plus particulièrement sur la carte numérique (20).

4. Procédé selon l'une quelconque des revendications 1 à 3, **caractérisé en ce que** les données propres à l'utilisateur contiennent des données géographiques et/ou des données relatives au trafic et/ou des données relatives à un lieu géographique et/ou des données relatives à un itinéraire.

5. Procédé selon l'une quelconque des revendications 1 à 4, **caractérisé en ce que** les données propres à l'utilisateur contiennent des données relatives à la communication entre les utilisateurs et/ou des données relatives aux propriétés.

6. Procédé selon l'une quelconque des revendications 1 à 5, **caractérisé en ce que** les données de lieu sont déterminées au moyen d'un procédé de détermination de lieu basé sur un GSM et/ou au moyen d'un procédé de détermination de lieu basé sur un GPS.

7. Procédé selon l'une quelconque des revendications 1 à 6, **caractérisé en ce que** les données de lieu sont actualisées à intervalles configurables.

8. Procédé selon l'une quelconque des revendications 1 à 7, **caractérisé en ce que** le système de transmission d'informations (10) est conçu comme système de communication et/ou comme système de navigation.

9. Procédé selon la revendication 8, **caractérisé en ce que** le système de transmission d'informations (10) est conçu comme système hybride à partir de deux systèmes partiels, un premier système partiel étant conçu comme système de communication et un second système partiel étant conçu comme système de navigation.

10. Procédé selon la revendication 9, **caractérisé en ce que** la détermination des données de lieu a lieu au moyen d'un système de communication, **en ce que** la représentation des données a lieu au moyen du système de navigation et **en ce que** la génération des données propres à l'utilisateur a lieu au moyen du système de communication et/ou du système de navigation.

11. Procédé selon l'une quelconque des revendications 1 à 10, **caractérisé en ce que** les données sont générées pour les utilisateurs mobiles d'au moins un groupe d'utilisateurs du système de transmission d'informations (10), un groupe d'utilisateurs étant d'abord généré électroniquement dans le système de transmission d'informations (10).
